(19) **Europäisches Patentamt**
**European Patent Office**
**Office européen des brevets**

(11) **EP 3 240 322 A1**

(12) **EUROPEAN PATENT APPLICATION**

(43) Date of publication:
**01.11.2017 Bulletin 2017/44**

(51) Int Cl.:
***H04W 16/18*** (2009.01)   ***H04W 16/22*** (2009.01)
***H04W 64/00*** (2009.01)

(21) Application number: **17163470.2**

(22) Date of filing: **29.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.04.2016 CN 201610251411**

(71) Applicant: **FUJITSU LIMITED**
**Kawasaki-shi,**
**Kanagawa 211-8588 (JP)**

(72) Inventors:
• **LI, Hongchun**
  **Chaoyang District, Beijing 100027 (CN)**
• **TIAN, Jun**
  **Chaoyang District, Beijing 100027 (CN)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(54) **METHOD AND APPARATUS FOR WIRELESS NETWORK DEPLOYMENT AND TERMINAL DEVICE**

(57) Embodiments of this disclosure provide a method and apparatus for wireless network deployment and a terminal device, wherein, the method includes: estimating whether a deployment position of a current node satisfies a requirement according to planned network information and deployed network information of the current node; and optimizing the deployment position of the current node when an estimation result of the estimating unit is no. With the embodiments of this disclosure, deployment quality of an actual deployment position of a wireless network node may be estimated, such that actual deployment satisfies a requirement on network planning.

901

whether a deployment position of a current node satisfies a requirement is estimated according to planned network information and deployed network information of the current node

902

the deployment position of the current node is optimized when an estimation result is no

FIG. 9

EP 3 240 322 A1

**Description**

Field

This disclosure relates to the field of communication technologies, and in particular to a method and apparatus for wireless network deployment and a terminal device.

Background

As progress of communication technologies and population of intelligent mobile devices, wireless networks achieve a rapid development, which not only bring convenience to people's lives, but also change styles of people's production and lives.

In comparison with wired networks, wireless networks have less requirements on infrastructural installations, and may be deployed more flexibly and conveniently. However, specific problems of deployment of wireless networks need to be solved. For example, devices in the wireless networks need no cables in communication, and achieve the communication by using electromagnetic waves. As electromagnetic waves have a broadcast characteristic, a signal transmitted by a device may be received by all devices within the communication range. Hence, propagation of electromagnetic waves is prone to be affected by environmental factors, such as a blockage, which may lower strength of the electromagnetic waves. Furthermore, as electromagnetic waves are invisible, connection relationships between devices cannot be directly observed in deploying nodes.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

It was found by the inventor that the broadcast characteristic, being prone to be affected by environment and invisibility, of electromagnetic waves bring uncertainty to deployment of wireless networks, and whether deployed networks are stable and whether deployed networks satisfy demands of users are hard to be confirmed. In a multi-hop network, such a problem is even severe, as a routing device in the multi-hop network will forward data for other devices, thereby making the network structure more complex.

Existing wireless network deployment technologies are mainly concentrated on network planning before the deployment and measurement of wireless link conditions during the deployment. Embodiments of this disclosure provide a method and apparatus for wireless network deployment and a terminal device, which are capable of supporting a multi-hop wireless network and may be used in an actual deployment scenarios, so as to estimate deployment quality of an actual deployment position of a wireless network node, such that actual deployment satisfies a requirement on network planning.

According to an embodiment of a first aspect of this disclosure, there is provided an apparatus for wireless network deployment, including:

a first storage unit configured to store planned network information;
a second storage unit configured to store deployed network information;
an estimating unit configured to estimate whether a deployment position of a current node satisfies a requirement according to planned network information and deployed network information of the current node; and
an optimizing unit configured to optimize the deployment position of the current node when an estimation result of the estimating unit is no.

[0008]   According to an embodiment of a second aspect of of this disclosure, there is provided a method for wireless network deployment, including:

whether a deployment position of a current node satisfies a requirement is estimated according to planned network information and deployed network information of the current node; and
the deployment position of the current node is optimized when an estimation result is no.

[0009]   According to an embodiment of a third aspect of this disclosure, there is provided a terminal device, including the apparatus as described in the first aspect.

An advantage of the embodiments of this disclosure exists in that with the embodiments of this disclosure, deployment quality of an actual deployment position of a wireless network node may be estimated, such that actual deployment satisfies a requirement on network planning.

With reference to the following description and drawings, the particular embodiments of this disclosure are disclosed in detail, and the principles of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

The drawings are included to provide further understanding of this disclosure, which constitute a part of the specification and illustrate the exemplary embodiments of this disclosure, and are used for setting forth the principles of this disclosure, by way of example only, together with the description. It is clear and understood that the accompanying drawings in the following description are some embodiments of this disclosure, and for those of ordinary skills in the art, other accompanying drawings may be obtained according to these accompanying drawings without making an inventive effort. In the drawings:

FIG 1 is a schematic diagram of an apparatus for wireless network deployment of Embodiment 1;
FIG 2 is a schematic diagram of a deployment process of this embodiment;
FIG 3 is a schematic diagram of an example of a planned network;
FIG 4 is a schematic diagram of an implementation of an estimating unit;
FIG 5 is a schematic diagram of an example of a deployed network corresponding to the planned network in FIG 3;
FIG 6 is a schematic diagram of an implementation of an optimizing unit;
FIG 7 is a schematic diagram of a terminal device of Embodiment 2;
FIG 8 is a schematic diagram of a systematic structure of the terminal device of

Embodiment 2; and

FIG 9 is a schematic diagram of a method for wireless network deployment of Embodiment 3.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

The embodiments of this disclosure shall be described below with reference to the accompanying drawings.

Embodiment 1

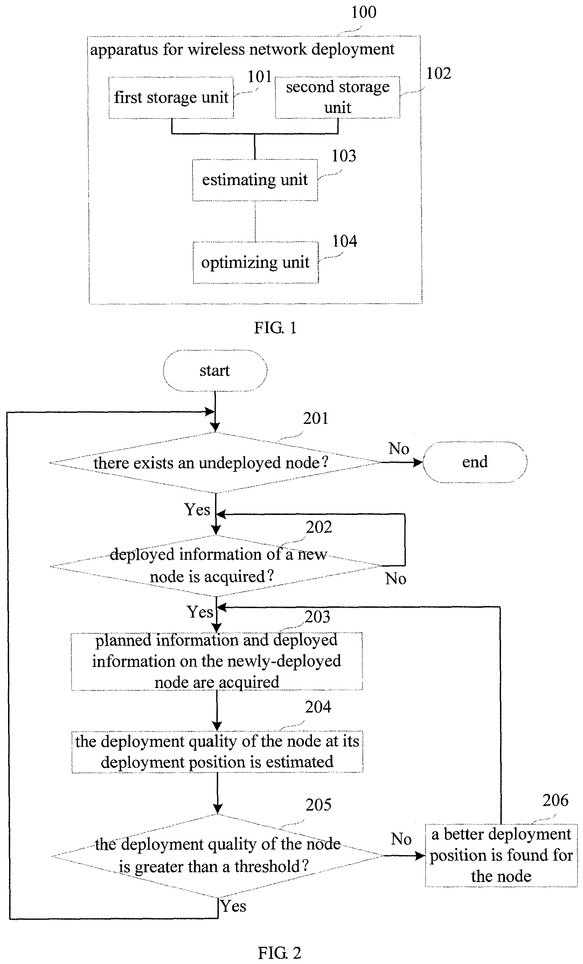

An embodiment of this disclosure provides an apparatus for wireless network deployment. FIG. 1 is a schematic diagram of the apparatus. Referring to FIG 1, the apparatus 100 includes: a first storage unit 101, a second storage unit 102, an estimating unit 103 and an optimizing unit 104. The first storage unit 101 is configured to store planned network information, the second storage unit 102 is configured to store deployed network information, the estimating unit 103 is configured to estimate whether a deployment position of a current node satisfies a requirement according to planned network information and deployed network information of the current node, and the optimizing unit 104 is configured to optimize the deployment position of the current node when an estimation result of the estimating unit is no.

[0019]    In this embodiment, before the network deployment, a network engineer or network planning software may design information on the number of nodes needed by the network, node deployment positions, and requirements on wireless connection between a node and other nodes, etc., according to information on demands of users, a deployment environment, and node performances, etc. The information obtained through network planning may be referred to as planned network information, which is stored in the first storage unit 101. In this embodiment, the second storage unit 102 stores and administrates deployed network information, including addresses and positions of deployed nodes and characteristics of connection between the deployed nodes and other nodes, etc. After a node is deployed at a position, the estimating unit 103 may estimate quality of the deployment position according to deployed information of the node, and give a quantitative index. If deployment quality of the node at a position cannot satisfy a requirement, the optimizing unit 104 may provide information on a new deployment position for the node, so as to improve deployment quality of the node.

With the apparatus of this embodiment, the planned network information and the deployed network information may be used to estimate the deployment quality of the deployment position of the current node during node deployment and judge whether the deployment position of the current node satisfies a requirement, and the deployment position is optimized when the deployment position of the current node does not satisfy the requirement. Hence, the deployment quality of the actual deployment position of the wireless network node may be estimated, such that the actual deployment satisfies the requirement on network planning.

The apparatus of this embodiment shall be described below with reference to an overall deployment process.

FIG 2 is a schematic diagram of the overall deployment process. Referring to FIG 2, the process includes:

step 201: whether there exists an undeployed node is judged;
in this embodiment, the first storage unit 101 stores information on nodes needing to be deployed, and the second storage unit 102 stores information on nodes that have been deployed; whether there exists an undeployed node may be determined by comparing the nodes stored in them; for example, if all the nodes in the first storage unit 101 have already been stored in the second storage unit 102, it shows that all the nodes have been deployed, and at this moment, the network deployment process is put to an end; otherwise, subsequent operations are performed;
step 202: the process waits for the second storage unit 102 to acquire deployed information of a new node;
in this embodiment, the deployed information of the new node enters into the second storage unit 102, which means that the node is being deployed and subsequent operations may be performed, that is, the deployment quality of the node at its deployment position is estimated by the apparatus 100 of this embodiment; otherwise, it means that no new node is deployed, and step 202 may be repeated;
step 203: planned information and deployed information on the newly-deployed node are acquired;
in this embodiment, for the node being deployed, in order to estimate the deployment quality of the node at its current deployment position, planned information and deployed information on the node are acquired first; and as described above, the planned information is stored in the first storage unit 101, and the deployed information is stored in the second storage unit 102;
step 204: the deployment quality of the node at its deployment position is estimated;
in this embodiment, after the planned information and deployed information on the node are acquired, the estimating unit 103 may estimate the deployment quality of the node at its current deployment position, so as to determine whether the deployment position of the node satisfies the requirement, which shall be described later; in this embodiment, the deployment quality is a quantitative index for estimating whether deployment of a node at a position can constitute a satisfactory network;
step 205: whether the deployment quality of the node at its position is greater than a threshold is judged;
in this embodiment, if the deployment quality is greater than the threshold, it shows that the deployment of the node is suitable, and deployment of other nodes may be performed; otherwise, it shows that the node cannot be deployed at its current position;
step 206: a better deployment scheme is found for the node;
in this embodiment, the optimizing unit 104 may be used to find a better deployment scheme for the node, the deployment position of the node may be changed, or other unplanned nodes may be added near the node.

The components of the apparatus 100 of this embodiment shall be described below respectively.

In this embodiment, the first storage unit 101 stores information on a planned network, briefly referred to as planned network information, which is information on a network expected to be deployed. As described above, before network deployment, the planned network information is generated by planning network via manual design or by automatically planning network via planning software, according to information on demands of users, a deployment environment, and node performances, etc., and may include addresses, positions and connection relationships, etc., of the nodes in the network. A address of a node is an index used for uniquely identifying the node. A position of a node is used for indicating an expected position where the node is deployed, which may be an accurate position coordinate, may be some alternative position coordinates, or may be a deployment range. A connection relationship of a node is a requirement on performance of a wireless link between the node and other nodes during network planning. A connection relationship between a node and another node may be expressed by quality of a link between them, may be expressed by a packet reception rate of a wireless link between them, or may be expressed by another individual index or complex index. Table 1 shows an example of the planned network information.

Table 1

| Node address | Deployment position | Deployable range | Addresses of neighboring nodes | Link quality |
|---|---|---|---|---|
| $N_i$ | $P_i$ | $R_i$ | $NN_i(1)$ | $L_i(1)$ |
| | | | $NN_i(2)$ | $L_i(2)$ |
| | | | ... | ... |
| | | | $NN_i(m_i)$ | $L_i(m_i)$ |

As shown in Table 1, the planned network information includes: a node address, a deployment position, a deployable range, addresses of neighboring nodes, and link quality, etc. $P_i$ is a coordinate of a deployment position of a node $N_i$, and $R_i$ is a radius of a circular area with $P_i$ as the center. A deployment area of a node is a circular area with $P_i$ as the center and $R_i$ as the radius. If $R_i = 0$, the deployment position of the node $N_i$ is fixed, and it only be deployed at the position of the coordinate of $P_i$. Quality of a link between the nodes is used to denote the connection relationship between them, $L_i(j)$ is quality of a link between the node $N_i$ and a neighboring node $NN_i(j)$; where, j=1,2,...,$m_i$, $m_i$ being the number of neighboring nodes of the node $N_i$.

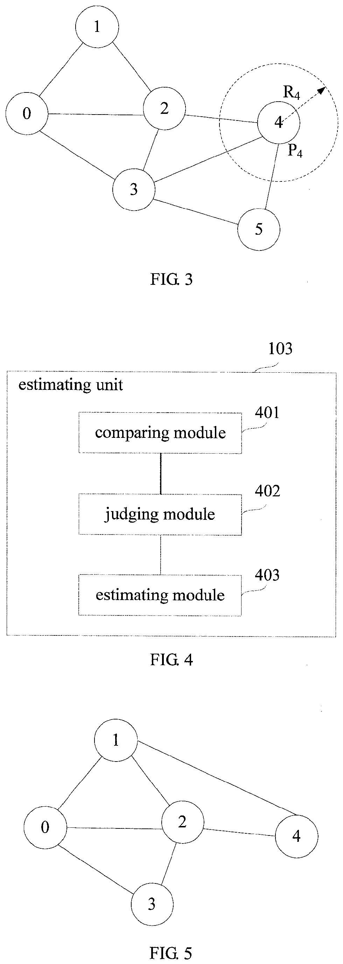

FIG 3 is a schematic diagram of an example of a planned network. As shown in FIG 3, the planned network consists of six nodes, connection lines between the nodes denoting that they are mutually neighboring nodes, that is, they may perform communication directly. Hence, in FIG 3, neighboring nodes of node 1 are node 0 and node 2, neighboring nodes of node 2 are node 0, node 1, node 3 and node 4, and so on. Furthermore, a circular area in dotted lines in FIG 3 denotes a deployable range of a node. Table 2 shows an example of planned network information of node 4 in FIG 3.

Table 2

| Node address | Deployment position | Deployable range | Addresses of neighboring nodes | Link quality |
|---|---|---|---|---|
| 4 | $P_4$ | $R_4$ | 2 | -75 |
| | | | 3 | -82 |
| | | | 5 | -80 |

As shown in Table 2, the address of the node is 4, it may be deployed in a circular area with $P_4$ as the center and $R_4$ as the radius, its neighboring nodes are nodes 2, 3 and 5, and quality of links between it and its neighboring nodes are -75dBm, -82dBm and -80dBm, respectively.

In this embodiment, the second storage unit 102 stores and administrates information on the nodes that have been deployed in the network, referred to as deployed network information. And an actual deployment position of a node, and measured actual quality of links between a node and other deployed nodes after the node is deployed, etc., all belong to the deployed network information. Table 3 shows an example of deployed network information.

Table 3

| Node address | Deployment position | Addresses of neighboring nodes | Link quality |
|---|---|---|---|
| $N_i$ | $P_i'$ | $NN_i'(1)$ | $L_i'(1)$ |
| | | $NN_i'(2)$ | $L_i'(2)$ |
| | | ... | ... |
| | | $NN_i'(k_i)$ | $L_i'(k_i)$ |

Similar to Table 2, Table 3 includes a node address, a deployment position, addresses of neighboring nodes, and link quality. However, Table 2 is a table of the planned network information, in which the information is obtained by designing and planning, and is a target of the network deployment. Table 3 is a table of the deployed network information, in which the information is obtained through actual measurement after the deployment of the network nodes, and is a result of network deployment. In Table 3, $N_i$ is the address of the node, $P_i'$ is the deployment position of the node, $NN_i'(j)$ is an address of a neighboring node of the node, and $L_i'(j)$ is quality of a link between the node and the neighboring node, where $1 < j < k_i$, $k_i$ being the number of neighboring nodes of the node.

In this embodiment, after the node is deployed at a position, the estimating unit 103 may estimate quality of the deployment position according to the planned information and deployed information of the node, and give a quantitative index. The higher the deployment quality is, the better the current deployment position of the node is, and the requirement may be better satisfied after the network is constituted; otherwise, the worse the current deployment position of the node is, and the requirement cannot be satisfied.

FIG 4 is a schematic diagram of an implementation of the estimating unit 103. As shown in FIG 4, in this implementation, the estimating unit 103 includes: a comparing module 401, a judging module 402 and an estimating module 403. The comparing module 401 is configured to compare the planned network information with the deployed network information of the current node, so as to determine a difference between the planned network information and the deployed network information of the current node; the judging module 402 is configured to judge whether the difference is less than a predetermined threshold; and the estimating module 403 is configured to determine that the deployment position of the current node satisfies the requirement when it is judged yes by the judging module 402, otherwise, determine that the deployment position of the current node does not satisfy the requirement. In this implementation, the difference between the planned network information and the deployed network information of the node is determined by comparing them. The smaller the difference is, the higher the quality of deployment is; otherwise, it shows that the deployment quality of the node is lower.

In an implementation, the comparing module 401 may determine the difference between the planned network information and the deployed network information of the node $N_i$ according to the formula below and take the difference as an index for estimating quality of deployment of the node $N_i$.

$$q(N_i) = k_1 \sum_{N_j \in B_i' \backslash B_i} d(L_i'(N_j), L_{th}) + k_2 \sum_{N_j \in B_i' \cap B_i} d(L_i'(N_j), L_i(N_j)) + k_3 \sum_{N_j \in (N \cap B_i) \backslash B_i'} d(L_i(N_j), L_{th}); \quad (1)$$

in formula (1),

$N$ is a set of all deployed nodes, that is, the nodes in $N$ are nodes that have been deployed,

$B_i$ is a set of planned neighboring nodes of the node $N_i$, that is, the nodes in $B_i$ are neighboring nodes of the node $N_i$ in the planning,

$B_i'$ is a set of actually deployed neighboring nodes of the node $N_i$, that is, the nodes in $B_i'$ are deployed neighboring nodes of the node $N_i$,

$B_i' \backslash B_i$ is a set of non-planned neighboring nodes in the actually deployed neighboring nodes of the node $N_i$, that is, according to current deployed information, the nodes in $B_i' \backslash B_i$ are neighboring nodes of the node $N_i$, but these nodes are not neighboring nodes of the node $N_i$ in the network planning,

$B_i' \cap B_i$ is a set of planned neighboring nodes in the actually deployed neighboring nodes of the node $N_i$, that is, according to current deployed information, the nodes in $B_i' \cap B_i$ are neighboring nodes of the node $N_i$, and these nodes are also neighboring nodes of the node $N_i$ in the network planning,

$(N \cap B_i) \backslash B_i'$ is a set of nodes belonging to the planned neighboring nodes of the node $N_i$ but not belonging to the deployed neighboring nodes of the node $N_i$, in all the deployed nodes, that is, the nodes in this set are neighboring nodes of the node $N_i$ in the planned network, but according to current deployed information, these nodes are not deployed neighboring nodes of the node $N_i$,

$L_i(j)$ is planned quality of a link between the node $N_i$ and a node $N_j$, that is, quality of the link between the node $N_i$ and the node $N_j$ in the planning, as shown in Table 1,

$L_i'(j)$ is actually deployed quality of the link between the node $N_i$ and the node $N_j$, that is, quality of the link between

the node $N_i$ and the node $N_j$ after deployment, as shown in Table 3,

$L_{th}$ is a link quality threshold, that is, when quality of a link between two nodes is less than $L_{th}$, communication cannot be directly performed between the two nodes, hence, they cannot be neighboring each other;

d(x,y) is a function for calculating a distance between x and y, and $k_1$, $k_2$ and $k_3$ are weight coefficients, $k_1 \in (0,1)$, $k_2 \in (0,1)$ $k_3 \in (0,1)$, and $k_1+k_2+k_3=1$.

In this implementation, the difference $q(N_i)$ between the planned information and the deployed information of the current node may be obtained by respectively calculating the differences between the actually deployed quality of the link and the planned quality of the link in the above three sets ( $B_i' \bigcap B_i$ , $B_i' \bigcap B_i$ and $(N \bigcap B_i) \setminus B_i'$ ), and then calculating a weighted sum of them.

FIG 5 is a schematic diagram of an example of the deployed network, which corresponds to the planned network in FIG 3; wherein, connection lines between the nodes denote that the nodes may mutually communicate, and they are mutually neighboring nodes. It is assumed that node 4 in FIG. 5 is a newly deployed node, and its deployment quality needs to be estimated. At this moment, a set of all deployed nodes is $N = \{0,1,2,3,4\}$, a set of planned neighboring nodes of node 4 is $B_4 = \{2,3,5\}$, and a set of deployed neighboring nodes of node 4 is $B_4' = \{1,2\}$. Hence, a set of non-planned neighboring nodes in the deployed neighboring nodes of node 4 is $B_4' \setminus B_4 = \{1\}$, a set of planned neighboring nodes in the actually deployed neighboring nodes of node 4 is $B_4' \bigcap B_4 = \{2\}$, and in the deployed nodes, a set of nodes belonging to the planned neighboring nodes of node 4 but not belonging to the deployed neighboring nodes of node 4 is $(N \bigcap B_4) \setminus B_4' = \{3\}$.

According to formula (1), the difference between the planned information and the deployed information of node 4 may be calculated by using formula (2):

$$q(N_4) = k_1 d(L_4'(1), L_{th}) + k_2 d(L_4'(2), L_4(2)) + k_3 d(L_4(3), L_{th}) \qquad (2).$$

In another implementation, the comparing unit 401 may calculate the difference between the planned information and the deployed information of the node according to the number of the planned neighboring nodes of the node and the number of the deployed neighboring nodes of the node. For example, the difference $q(N_i)$ between them may be calculated according to the formula below and is taken as an index for estimating deployment quality of the node $N_i$.

$$q(N_i) = \left| B_i' \setminus B_i \right| + \left| (N \bigcap B_i) \setminus B_i' \right| \qquad (3).$$

In formula (3), meanings of $B_i' \bigcap B_i$ and $(N \bigcap B_i) \setminus B_i'$ are identical to those described above, and shall not be described herein any further, and $| \cdot |$ is calculating the number of elements in a set.

The difference $q(N_i)$ between the planned information and the deployed information of node $N_i$ may be obtained by using formula (3), and the larger a value of $q(N_i)$ is, the larger the difference between the planned information and the deployed information of node $N_i$ is; otherwise, the smaller the difference is.

The planned network in FIG 3 and the deployed network in FIG. 5 are still taken as examples. It is assumed that node 4 in FIG 5 is a newly deployed node, and its deployment quality needs to be estimated. At this moment, a set of all deployed nodes is $N = \{0,1,2,3,4\}$, a set of planned neighboring nodes of node 4 is $B_4 = \{2,3,5\}$, and a set of deployed neighboring nodes of node 4 is $B_4' = \{1,2\}$. Hence, a set of non-planned neighboring nodes in the deployed neighboring nodes of node 4 is $B_4' \setminus B_4 = \{1\}$, and in the deployed nodes, a set of nodes belonging to the planned neighboring nodes of node 4 but not belonging to the deployed neighboring nodes of node 4 is $(N \bigcap B_4) \setminus B_4' = \{3\}$. According to formula (3), it is obtained that the difference between the planned information and the deployed information of node 4 is $q(N_4) = 2$.

In this embodiment, whether the deployment position of the current node satisfies the requirement may be determined by the estimating unit 103. If it does not satisfy the requirement, the optimizing unit 104 may be used to optimize the deployment position, such as providing the node with information on a new deployment position, so as to improve the deployment quality of the node.

In this embodiment, there exist three results of comparison between quality of a link between two nodes after deployment and planned quality of the link between them. If the quality of the link between the two nodes after deployment is equal to the planned quality of the link between them, it means that a distance between them satisfies a planned requirement. If the quality of the link between the two nodes after deployment is better than the planned quality of the link between them, it means that the distance between them is shorter than the planned requirement. And if the quality of the link between the two nodes after deployment is worse than the planned quality of the link between them, it means that a distance between them is farther than the planned requirement. Hence, in finding a new deployment position, a node needs to be away from a node with quality of a link between them after deployment better than its planned quality of the link, and close to a node with quality of a link between them after deployment worse than its planned quality of the link.

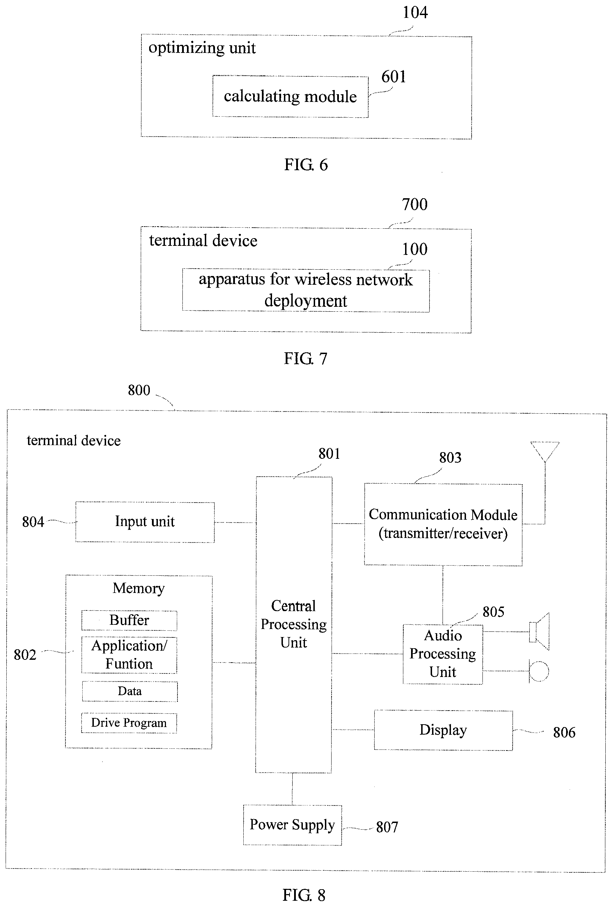

FIG 6 is a schematic diagram of an implementation of the optimizing unit 104. As shown in FIG 6, in this implementation, the optimizing unit 104 includes: a calculating module 601 configured to calculate a new deployment position of the current node, so that the current node is away from nodes in the set of non-planned neighboring nodes in the actually deployed neighboring nodes, and is close to nodes in the set of nodes (in the deployed nodes) belonging to the planned neighboring nodes of the current node but not belonging to the deployed neighboring nodes of the current node.

In an implementation, the calculating module 601 may calculate the new deployment position of the node by using a center of positions of multiple nodes, so that the new deployment position of the node is away from a center of deployment positions of all nodes in set $B_i' \setminus B_i$, and close to a center of deployment positions of all nodes in set $(N \cap B_i) \setminus B_i'$. For example, the calculating module 601 may calculate a new deployment position of the node $N_i$ according to the formula below:

$$p_i = p_i' + \frac{C_i - F_i}{d(C_i, F_i)} \Delta \tag{4};$$

In formula (4), $p_i$ is the new deployment position of the node $N_i$, $p_i'$ is the current deployment position of the node $N_i$, $C_i$ is a center of deployment positions of all nodes in the set $(N \cap B_i) \setminus B_i'$, $F_i$ is a center of deployment positions of all nodes in a set $B_i' \setminus B_i$, d(x,y) is a function for calculating a distance between x and y, and $\Delta$ is a moving step of a node position, which is briefly referred to as a moving step. In this implementation, meanings of $B_i' \cap B_i$ and $(N \cap B_i) \setminus B_i'$ are identical to those described above.

In another implementation, the calculating module 601 may respectively calculate movement relationships between the current node and other modes, so as to obtain the new deployment position of the current node. For example, the calculating module 601 may calculate the new deployment position of the node $N_i$ according to the formula below:

$$p_i = p_i' + \frac{\sum_{j \in N} g_{ij}(p_j' - p_i') / d(p_j', p_i')}{g_{ij}} \Delta \tag{5};$$

In formula (5), $p_i$ is the new deployment position of the current node $N_i$, $p_i'$ is the current deployment position of the current node $N_i$, d(x,y) is a function for calculating a distance between x and y, $\Delta$ is a moving step, $g_{ij}$ is a moving weighted value, and

$$g_{ij} = \begin{cases} d(L_i'(j), L_i(j)), & \text{if } L_i'(j) < L_i(j) \\ -d(L_i'(j), L_i(j)), & \text{if } L_i'(j) > L_i(j) \\ 0, & \text{if } L_i'(j) = L_i(j) \end{cases} \tag{6};$$

In formula (6), $L_i(j)$ is planned quality of a link between the current node $N_i$ and a node $N_j$, $L_i^{'}(j)$ is actually deployed quality of a link between the node $N_i$ and the node $N_j$, and d(x,y) is a function for calculating a distance between x and y. For the node $N_i$, if $L_i^{'}(j) > L_i(j)$, the node $N_i$ should be away from the node $N_j$; otherwise, if $L_i^{'}(j) < L_i(j)$, the node $N_i$ should be close to the node $N_j$.

With the apparatus of this embodiment, deployment quality of an actual deployment position of a wireless network node may be estimated, such that actual deployment satisfies a requirement on network planning.

Embodiment 2

An embodiment of this disclosure provides a terminal device, including the apparatus for wireless network deployment as described in Embodiment 1.

FIG 7 is a schematic diagram of the terminal device. Referring to FIG 7, the terminal device 700 includes the apparatus 100 for wireless network deployment, the apparatus 100 being configured to: estimate whether a deployment position of a current node satisfies a requirement according to planned network information and deployed network information of the current node, and optimize the deployment position of the current node when an estimation result is no. As the apparatus 100 for wireless network deployment has been described in Embodiment 1 in detail, its contents are incorporated herein, and shall not be described herein any further.

FIG. 8 is a schematic diagram of a systematic structure of the terminal device of this embodiment. As shown in FIG 8, the terminal device 800 may include a central processing unit 801 and a memory 802, the memory 802 being coupled to the central processing unit 801. It should be noted that this figure is illustrative only, and other types of structures may also be used, so as to supplement or replace this structure and achieve a telecommunications function or other functions.

In an implementation, the functions of the apparatus 100 for wireless network deployment described in Embodiment 1 may be integrated into the central processing unit 801. For example, the central processing unit 801 may be configured to estimate whether a deployment position of a current node satisfies a requirement according to planned network information and deployed network information of the current node, and optimize the deployment position of the current node when an estimation result is no.

**[0053]** In another implementation, the apparatus 100 for wireless network deployment described in Embodiment 1 and the central processing unit 801 may be configured separately. For example, the apparatus 100 may be configured as a chip connected to the central processing unit 801, with its functions being realized under control of the central processing unit 801.

As shown in FIG. 8, the terminal device 800 may further include a communication module 803, an input unit 804, an audio processing unit 805, a display 806 and a power supply 807. It should be noted that the terminal device 800 does not necessarily include all the parts shown in FIG. 8, and furthermore, the terminal device 800 may include parts not shown in FIG. 8, and the prior art may be referred to.

As shown in FIG. 8, the central processing unit 801 is sometimes referred to as a controller or control, and may include a microprocessor or other processor devices and/or logic devices. The central processing unit 801 receives input and controls operations of every components of the terminal device 800.

In this embodiment, the memory 802 may be, for example, one or more of a buffer memory, a flash memory, a hard drive, a mobile medium, a volatile memory, a nonvolatile memory, or other suitable devices, which may store the above planned network information and deployed network information, and may further store a program executing related information. And the central processing unit 801 may execute the program stored in the memory 802, so as to realize information storage or processing, etc. Functions of other parts are similar to those of the prior art, which shall not be described herein any further. The parts of the terminal device 800 may be realized by specific hardware, firmware, software, or any combination thereof, without departing from the scope of the present disclosure.

With the terminal device of this embodiment, deployment quality of an actual deployment position of a wireless network node may be estimated, such that actual deployment satisfies a requirement on network planning.

Embodiment 3

An embodiment of this disclosure provides a method for wireless network deployment. As principles of the method for solving problems are identical to that of the apparatus in Embodiment 1, the implementation of the apparatus in Embodiment 1 may be referred to for implementation of the method, with identical contents being not going to be described herein any further.

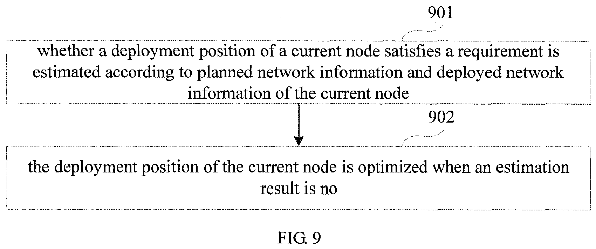

FIG 9 is a schematic diagram of an implementation of the method for wireless network deployment of this embodiment. Referring to FIG 9, the method includes:

step 901: whether a deployment position of a current node satisfies a requirement is estimated according to planned network information and deployed network information of the current node; and

step 902: the deployment position of the current node is optimized when an estimation result is no.

**[0060]** In this embodiment, the planned network information is information on planned nodes and includes node addresses, deployment positions and connection relationships, of the planned nodes; and the deployed network information is information on deployed nodes and includes node addresses, deployment positions and connection relationships, of the deployed nodes. Embodiment 1 may be referred for details, which shall not be described herein any further.

In this embodiment, in step 901, the planned network information of the current node may be compared with the deployed network information of the current node first, so as to determine a difference between the planned network information and the deployed network information of the current node, and then whether the difference is less than a predetermined threshold is judged; thereafter, it is determined that the deployment position of the current node satisfies the requirement when the above difference is less than the threshold, otherwise, it is determined that the deployment position of the current node does not satisfy the requirement.

In an implementation, the difference may be calculated according to above formula (1), and in another implementation, the difference may be calculated according to above formula (3), the contents of which being incorporated herein, and being not going to be described herein any further.

In this embodiment, in step 902, a new deployment position of the current node may be calculated, so that the current node is away from nodes in the set of non-planned neighboring nodes in the deployed neighboring nodes, and is close to nodes in the set of nodes (in the deployed nodes) belonging to the planned neighboring nodes of the current node but not belonging to the deployed neighboring nodes of the current node.

In an implementation, the new deployment position may be calculated according to above formula (4), and in another implementation, the new deployment position may be calculated according to above formulae (5) and (6), the contents of which being incorporated herein, and being not going to be described herein any further.

With the method of this embodiment, deployment quality of an actual deployment position of a wireless network node may be estimated, such that actual deployment satisfies a requirement on network planning.

An embodiment of the present disclosure provides a computer readable program code, which, when executed in a terminal device, will cause a computer unit to carry out the method as described in Embodiment 3 in the terminal device.

An embodiment of the present disclosure provides a computer readable medium, including a computer readable program code, which will cause a computer unit to carry out the method as described in Embodiment 3 in a terminal device.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

**Claims**

1. An apparatus for wireless network deployment, comprising:

   a first storage unit configured to store planned network information;
   a second storage unit configured to store deployed network information;
   an estimating unit configured to estimate whether a deployment position of a current node satisfies a requirement according to planned network information and deployed network information of the current node; and
   an optimizing unit configured to optimize the deployment position of the current node when an estimation result of the estimating unit is no.

2. The apparatus according to claim 1, wherein,
   the planned network information is information on planned nodes and comprises node addresses, deployment positions and connection relationships, of the planned nodes;
   and the deployed network information is information on deployed nodes and comprises node addresses, deployment positions and connection relationships, of the deployed nodes.

3. The apparatus according to any of claim 1 or 2, wherein the estimating unit comprises:

   a comparing module configured to compare the planned network information with the deployed network information of the current node, so as to determine a difference between the planned network information and the deployed network information of the current node;
   a judging module configured to judge whether the difference is less than a predetermined threshold; and
   an estimating module configured to determine that the deployment position of the current node satisfies the requirement when it is judged yes by the judging module, otherwise, determine that the deployment position of the current node does not satisfy the requirement.

4. The apparatus according to claim 3, wherein the comparing module calculates the difference between the planned network information and the deployed network information of the current node according to the formula below:

$$q(N_i) = k_1 \sum_{N_j \in B_i' \backslash B_i} d(L_i'(N_j), L_{th}) + k_2 \sum_{N_j \in B_i' \cap B_i} d(L_i'(N_j), L_i(N_j)) + k_3 \sum_{N_j \in (N \cap B_i) \backslash B_i'} d(L_i(N_j), L_{th});$$

where, $N$ is a set of all deployed nodes, $B_i$ is a set of planned neighboring nodes of the current node $N_i$, $B_i'$ is a set of actually deployed neighboring nodes of the current node $N_i$, $B_i' \backslash B_i$ is a set of non-planned neighboring nodes in the actually deployed neighboring nodes of the current node $N_i$, $B_i' \cap B_i$ is a set of planned neighboring nodes in the actually deployed neighboring nodes of the current node $N_i$, $(N \cap B_i) \backslash B_i'$ is a set of nodes in all the deployed nodes belonging to the planned neighboring nodes of the current node $N_i$ but not belonging to the deployed neighboring nodes of the current node $N_i$, $L_i(j)$ is planned quality of a link between the current node $N_i$ and a node $N_j$, $L_i'(j)$ is actually deployed quality of the link between the current node $N_i$ and the node $N_j$, $L_{th}$ is a link quality threshold, $d(x,y)$ is a function for calculating a distance between x and y, and $k_1$, $k_2$ and $k_3$ are weight coefficients, $k_1 \in (0,1)$, $k_2 \in (0,1)$, $k_3 \in (0,1)$, and $k_1 + k_2 + k_3 = 1$.

5. The apparatus according to claim 3, wherein the comparing module calculates the difference between the planned network information and the deploy network information of the current node according to the formula below:

$$q(N_i) = \left| B_i' \backslash B_i \right| + \left| (N \cap B_i) \backslash B_i' \right|;$$

where, $B_i' \backslash B_i$ i is a set of non-planned neighboring nodes in the actually deployed neighboring nodes of the current node $N_i$, $(N \cap B_i) \backslash B_i'$ is a set of nodes in all the deployed nodes belonging to the planned neighboring nodes of the current node $N_i$ but not belonging to the deployed neighboring nodes of the current node $N_i$, and $| . |$ is calculating the number of elements in a set.

6. The apparatus according to any preceding claim, wherein the optimizing unit comprises:

   a calculating module configured to calculate a new deployment position of the current node, so that the current node is away from nodes in the set of non-planned neighboring nodes in the actually deployed neighboring nodes, and is close to nodes in the set of nodes in all the deployed nodes belonging to the planned neighboring nodes of the current node but not belonging to the deployed neighboring nodes of the current node.

7. The apparatus according to claim 6, wherein the calculating module calculates the new deployment position of the current node according to the formula below:

$$p_i = p_i' + \frac{C_i - F_i}{d(C_i, F_i)} \Delta;$$

where, $p_i$ is the new deployment position of the current node $N_i$, $p_i^{'}$ is the current deployment position of the current node $N_i$, $C_i$ is a center of deployment positions of all nodes in a set $(N \bigcap B_i) \setminus B_i^{'}$, the set $(N \bigcap B_i) \setminus B_i^{'}$ being a set of nodes in all the deployed nodes belonging to the planned neighboring nodes of the current node $N_i$ but not belonging to the deployed neighboring nodes of the current node $N_i$, $F_i$ is a center of deployment positions of all nodes in a set $B_i^{'} \setminus B_i$, the set $B_i^{'} \setminus B_i$ being a set of non-planned neighboring nodes in the actually deployed neighboring nodes of the current node $N_i$, d(x,y) is a function for calculating a distance between x and y, and $\Delta$ is a moving step.

8. The apparatus according to claim 6, wherein the calculating module calculates the new deployment position of the current node according to the formula below:

$$p_i = p_i^{'} + \frac{\sum_{j \in N} g_{ij}(p_j^{'} - p_i^{'})/d(p_j^{'}, p_i^{'})}{g_{ij}} \Delta ;$$

where, $p_i$ is the new deployment position of the current node $N_i$, $p_i^{'}$ is the current deployment position of the current node $N_i$, d(x,y) is a function for calculating a distance between x and y, $\Delta$ is a moving step, $g_{ij}$ is a moving weighted value, and

$$g_{ij} = \begin{cases} d(L_i^{'}(j), L_i(j)), & \text{if } L_i^{'}(j) < L_i(j) \\ -d(L_i^{'}(j), L_i(j)), & \text{if } L_i^{'}(j) > L_i(j) \ ; \\ 0, & \text{if } L_i^{'}(j) = L_i(j) \end{cases}$$

where, $L_i(j)$ is planned quality of a link between the node $N_i$ and a node $N_j$, $L_i^{'}(j)$ is actually deployed quality of the link between the node $N_i$ and the node $N_j$, and d(x,y) is a function for calculating a distance between x and y.

9. A terminal device, comprising an apparatus for wireless network deployment; wherein, the apparatus for wireless network deployment is configured to:

estimate whether a deployment position of a current node satisfies a requirement according to planned network information and deployed network information of the current node;
and optimize the deployment position of the current node when an estimation result is no.

10. A method for wireless network deployment, comprising:

estimating whether a deployment position of a current node satisfies a requirement according to planned network information and deployed network information of the current node; and
optimizing the deployment position of the current node when an estimation result is no.

100

apparatus for wireless network deployment

101
first storage unit

102
second storage unit

103
estimating unit

104
optimizing unit

FIG. 1

start

201
there exists an undeployed node? — No → end

Yes

202
deployed information of a new node is acquired? — No

Yes

203
planned information and deployed information on the newly-deployed node are acquired

204
the deployment quality of the node at its deployment position is estimated

205
the deployment quality of the node is greater than a threshold? — No → 

206
a better deployment position is found for the node

Yes

FIG. 2

FIG. 3

FIG. 4

FIG. 5

104

optimizing unit

601

calculating module

FIG. 6

700

terminal device

100

apparatus for wireless network deployment

FIG. 7

800

terminal device

801

803

804 — Input unit

Communication Module
(transmitter/receiver)

Memory

802

Buffer

Application/
Funtion

Data

Drive Program

Central
Processing
Unit

805

Audio
Processing
Unit

Display 806

Power Supply 807

FIG. 8

901

whether a deployment position of a current node satisfies a requirement is estimated according to planned network information and deployed network information of the current node

902

the deployment position of the current node is optimized when an estimation result is no

FIG. 9

Europäisches
Patentamt

European
Patent Office

Office européen
des brevets

# EUROPEAN SEARCH REPORT

Application Number

EP 17 16 3470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/081503 A1 (MOWER CARL [US]) 12 April 2007 (2007-04-12) * paragraphs [0011], [0015] - [0029] * ----- | 1-10 | INV. H04W16/18 |
| X | US 2012/129559 A1 (POCHOP JR JEFFREY L [US]) 24 May 2012 (2012-05-24) * paragraphs [0062] - [0068]; figures 8A-9 * ----- | 1-10 | ADD. H04W16/22 H04W64/00 |
| A | US 2006/223546 A1 (CLAUSSEN HOLGER [GB]) 5 October 2006 (2006-10-05) * paragraphs [0006] - [0015], [0044] - [0078]; figures 2,3,4,5 * ----- | 1-10 | |
| A | EP 2 897 401 A1 (ZTE CORP [CN]) 22 July 2015 (2015-07-22) * paragraphs [0014], [0018] - [0035] * ----- | 1-10 | |

TECHNICAL FIELDS
SEARCHED (IPC)

H04W

The present search report has been drawn up for all claims

| Place of search | Date of completion of the search | Examiner |
|---|---|---|
| Berlin | 25 September 2017 | Bocking, Philip |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 3470

25-09-2017

| Patent document cited in search report | | Publication date | Patent family member(s) | | Publication date |
|---|---|---|---|---|---|
| US 2007081503 | A1 | 12-04-2007 | CA | 2625228 A1 | 19-04-2007 |
| | | | CN | 101317481 A | 03-12-2008 |
| | | | EP | 1941759 A1 | 09-07-2008 |
| | | | US | 2007081503 A1 | 12-04-2007 |
| | | | WO | 2007044495 A1 | 19-04-2007 |
| US 2012129559 | A1 | 24-05-2012 | CN | 102480744 A | 30-05-2012 |
| | | | EP | 2456251 A1 | 23-05-2012 |
| | | | EP | 3223551 A1 | 27-09-2017 |
| | | | US | 2012129559 A1 | 24-05-2012 |
| US 2006223546 | A1 | 05-10-2006 | EP | 1864528 A1 | 12-12-2007 |
| | | | US | 2006223546 A1 | 05-10-2006 |
| | | | WO | 2006107555 A1 | 12-10-2006 |
| EP 2897401 | A1 | 22-07-2015 | CN | 102857949 A | 02-01-2013 |
| | | | EP | 2897401 A1 | 22-07-2015 |
| | | | JP | 2015530050 A | 08-10-2015 |
| | | | US | 2015227577 A1 | 13-08-2015 |
| | | | WO | 2014040488 A1 | 20-03-2014 |

For more details about this annex : see Official Journal of the European Patent Office, No. 12/82